# EUROPÄISCHE PATENTSCHRIFT

(11) **EP 2 438 337 B1**
(45) Veröffentlichungstag und Bekanntmachung des Hinweises auf die Patenterteilung: **26.03.2014**
(21) Anmeldenummer: 10728112.3
(22) Anmeldetag: 29.05.2010
(51) Int. Cl.: F16K 35/02

(54) **DREHMOMENTSTÜTZE FÜR EINE VENTILVERRIEGELUNG**
Torque support for a lock
Soutien de couple pour un verrouillage

(30) Priorität: 04.06.2009 EP 09007371
(43) Veröffentlichungstag der Anmeldung: 11.04.2012
(73) Patentinhaber: Haake, André, 48703 Stadtlohn (DE); Haake, Patrick, 48691 Vreden (DE); Haake, Oliver, 48703 Stadtlohn (DE)
(72) Erfinder: Haake, André, 48703 Stadtlohn (DE); Haake, Patrick, 48691 Vreden (DE); Haake, Oliver, 48703 Stadtlohn (DE)
(74) Vertreter: Habbel, Ludwig
(86) Internationale Anmeldenummer: PCT/DE2010/000604
(87) Internationale Veröffentlichungsnummer: WO 2010/139302

(56) Entgegenhaltungen:
- GB-A- 558 263
- US-A- 5 806 555
- US-A- 6 152 161

## Beschreibung

Die Erfindung bezieht sich auf eine Drehmomentstütze für eine Ventilverriegelung, um eine Drehung der Verriegelung gegenüber dem Ventil zu verhindern.

Ventilverriegelungssysteme haben die Aufgabe, zu verhindern, dass das Ventil unbefugt betätigt werden kann, so dass eine unbefugte Veränderung des Zustandes des Ventiles ausgeschlossen ist.

Diese Verriegelungssysteme werden daher als gesondertes Bauteil zwischen dem Ventil und der Ventilbetätigung eingeschaltet, wobei dieses gesonderte Bauteil im wesentlichen die Verbindungsmittel zwischen der Ventilbetätigung, z. B. einem Handrad oder einem Handhebel und der Ventilspindel besitzt bzw. beaufschlagt.

Ventilverriegelungssysteme bzw. deren Drehmomentstützen und Adapter für handbetätigte Ventile werden in Anpassung an die unterschiedlichsten im Einsatz befindlichen Ventile in verschiedenen Ausführungen benötigt. Adapter der Verriegelungssysteme müssen an die verschiedenen Spindelformen angepasst werden. Der Regelfall ist der, dass bei diesen Verriegelungssystemen die Endlage eingestellt werden kann. Häufig werden für die Endlage die Positionen "Ventil ganz geöffnet" und "Ventil ganz geschlossen" gewählt, wobei aber auch andere Ventilpositionen möglich sind.

Die Verbindung zwischen der Ventilspindel und dem eigentlichen Schloss des Verriegelungssystems erfolgt z. B. dabei über eine Hohlwelle, die an ihrer Aussenseite Zähne für eine Sperrklinke und in ihren Endbereichen Aufnahmen für Adapter aufweist, die dem Anschluss der Spindel einerseits und des Handrades oder des Betätigungshebels andererseits dienen.

Ventilverriegelungssysteme werden auch überall dort eingesetzt, wo eine Ablauffolge für Ventile zur Erhöhung der Personen- und Anlagensicherheit beitragen. Häufig sind das Ölbohrinseln, Chemie- und Raffineriewerke, die Gasindustrie sowie die Anlagen der Kernenergie.

Eine Drehmomentstütze hat generell die Aufgabe, eine Verdrehung der Ventilverriegelung gegenüber dem Ventil zu verhindern. Dies ist auch dafür wichtig, dass die Endlagenstellung der Verriegelung sichergestellt ist. Im verriegelten Zustand muss die Drehmomentstütze bei unerlaubtem Betätigungsversuch des Ventils das Drehmoment abfangen, so dass nicht die ganze Verriegelung auf dem Ventil gedreht werden kann.

Bekannt geworden ist dabei aus der EP 0 942 215 A1 eine Anordnung, bei der ein robuster schwerer Steg vorgesehen wird, der an der Ventilverriegelung festgelegt wird, das Handrad übergreift und unterhalb des Handrades an zwei Bügel anschließt, welche wie eine Klammer das Ventil bzw. sein Ventilgehäuse umgreifen. Diese beiden Klammern sind miteinander verschraubt und müssen an das Ventilgehäuse bzw. das Ventilgestänge angepasst sein. Diese Version ist aufwendig zu installieren und zerstört das Design der Verriegelung an sich.

Aus der WO 2009/026 905 A1 ist eine Anordnung bekannt geworden, bei der ein Adapterring zum Anschluss der Drehmomentstütze an die Ventilverriegelung und zwei innerhalb des Adapterringes angeordnete Riegelringe, die je eine sich nach unten erstreckende Widerlagerscheibe tragen, vorgesehen sind.

Die Widerlagerscheiben erstrecken sich nur über einen Teil des Umfanges der Riegelringe und können so entweder die den Schieber oder das Verschlussmittel enthaltende Leitung übergreifen oder entsprechende Vorrichtungen am Ventilgehäuse durch die die Drehung der Ventilverriegelung verhindert wird. Es sind eine Vielzahl von Arretierschrauben zur drehfesten Befestigung der Riegelringe in dem Adapterring notwendig und vorgesehen. Diese Anordnung ist individuell an jede Ventilausführung angepasst und kann daher nicht vorgefertigt hergestellt werden und benötigt zum Einbau eine Vielzahl von Bauteilen mit Schrauben, Werkzeugen u. dgl.

Aus der US 5 806 555 A ist eine gattungsgemäße Riegelvorrichtung für Ventile bekannt geworden, bei welcher der dem Ventilschieber betätigende Hebel in seinen beiden Endlagen, d. h. in der ganz offenen Stellung oder in der ganz geschlossenen Stellung über zwei übergreifende Bügel festgelegt wird, die miteinander über Vorhängeschlösser verbunden und gesichert werden können. Dieses System ist an eine bestimmte Geometrie des Ventilgehäuses und der Betätigungseinrichtung angepasst, indem es das Ventilgehäuse und auch die Betätigungseinrichtung eng anliegend umschließt.

Aus der US 6 152 161 A eine Riegelvorrichtung für Ventile bekannt geworden, die ebenfalls an eine bestimmte Geometrie des Ventilgehäuses angepasst ist, indem es das Ventilgehäuse eng anliegend umschließt.

Der Erfindung liegt die Aufgabe zugrunde, eine Drehmomentstütze vorzuschlagen, die geringe Montagekosten verursacht, eine preiswerte Herstellung ermöglicht und an unterschiedlichen Ventiltypen verwendet werden kann.

Diese der Erfindung zugrundeliegende Aufgabe wird durch die Lehre der drei Hauptansprüche gelöst.

Vorteilhafte Ausgestaltungen sind in den Unteransprüchen erläutert.

Mit anderen Worten ausgedrückt wird ein Anschlussgehäuse vorgeschlagen, das an die Ventilverriegelung anschließt oder in ihr angeordnet ist und das wenigstens einen Ausleger schwenkbar aufweist, der am Anschlussgehäuse schwenkbar festgelegt gegen das Ventilgehäuse geklappt werden kann, wobei eine Sperreinrichtung ein Zurückschwenken des Auslegers verhindert. Drei unterschiedliche Ausgestaltungen der Sperreinrichtung sind in den drei Hauptansprüchen beschrieben. Dadurch, dass der Ausleger jeweils schwenkbar ist und mittels der jeweiligen Sperreinrichtung in unterschiedlichen Schwenkstellungen gegen eine Rückbewegung gesichert ist, kann die Drehmomentstütze an unterschiedlich ausgestalteten Ventilgehäusen verwendet werden, indem der Ausleger jeweils so weit geschwenkt wird, bis er dem Ventilgehäuse anliegt und damit eine Drehbewegung der Ventil-Betätigungseinrichtung verhindert, sofern nicht mittels des der Schlüssel diese Drehbeweglichkeit ermöglicht und die Ventilverriegelung entriegelt ist.

In gleicher Weise ist es aber auch möglich, dass das Anschlussgehäuse an das Ventilgehäuse angeschlossen wird und der Ausleger sich im Einsatzfall an die Ventilverriegelung anlegt.

Vorteilhaft kann vorgesehen sein, dass der oder die Ausleger hinsichtlich ihrer Schwenkbewegung unter Vorspannung an das Anschlussgehäuse anschließen, wobei im Einsatzfall die Schwenkbewegung des oder der Ausleger durch den Einbau einer Sperreinrichtung in dem Anschlussgehäuse nur in einer Richtung ermöglicht wird. Hierdurch wird erreicht, dass die Ventilverriegelung sich gegenüber dem Ventilgehäuse nicht drehen kann, weil sich der oder die Ausleger entweder an Unebenheiten des Ventilgehäuses anlegen oder die mit dem Ventil ausgerüstete Leitung einseitig oder beidseitig übergreifen oder wenn das Anschlussgehäuse am Ventilgehäuse angebracht wird, die Ausleger sich an eine ovale oder polygonale Ventilverriegelung anlegen.

Die Sperreinrichtung kann in einer ersten Ausgestaltung durch federbeaufschlagte Rasterscheiben gebildet werden, die als Zahnscheiben ausgebildet sind einerseits von dem Ausleger und andererseits von einem Druckkörper getragen werden.

In einer zweiten Ausgestaltung kann die Sperreinrichtung durch eine Sperrklinke gebildet werden, die die Bewegung in einer Richtung ermöglicht, in der entgegengesetzten Richtung aber sperrt.

Gemäß einer dritten Ausgestaltung kann der Ausleger, d. h. also das Lagerteil des Auslegers, ein oder mehrere Bohrungen aufweisen und das Anschlussgehäuse ein oder mehrere Anschlussscheiben, die mit dem Kopfteil des Lagerteiles korrespondieren, wobei in diesen Anschlussscheiben ebenfalls Bohrungen vorgesehen sind. Die Bohrungen können auch auf unterschiedlichen Teilkreisdurchmessern liegen und sind dazu bestimmt, Stifte aufzunehmen, die nunmehr den Ausleger mit dem Anschlussgehäuse fest verbinden. Der Ausleger wird dabei in Sperrstellung gebracht und dann verstiftet, wobei durch unterschiedliche Teilungsmaße für die Bohrungen, eine Feinjustierung erfolgen kann.

Der oder die Ausleger können vorteilhaft endständig Distanzelemente tragen, die kleine Durchmesserunterschiede des Ventilgehäuses ausgleichen können. Diese Distanzelemente können aufschiebbar auf die Ausleger sein oder aber die Distanzelemente können auch exzentrisch am Ende der Ausleger gelagert sein und dadurch also gewisse Abstandsdifferenzen überbrücken.

Der Ausleger selbst kann einteilig oder mehrteilig ausgebildet sein.

Außerdem besteht die Möglichkeit, dass die Ausleger Spannbänder tragen, so dass sie im angelegten Zustand durch Spannbänder zusätzlich festgelegt werden können.

Die Sperreinrichtung ist vorzugsweise im Anschlussgehäuse vorgesehen und hier gegen Manipulation sicher untergebracht, d. h. Zugang zur Sperreinrichtung ist nur unter Einsatz von bestimmten und speziellen Werkzeugen möglich. Es kann auch vorgesehen sein, dass gar kein Zugang vorgesehen wird, weil die Sperreinrichtung vernietet ist. Dann ist nur ein Zugang durch Zerstörung möglich.

Ausführungsbeispiele der Erfindung werden nachfolgend anhand der Zeichnungen erläutert. Die Zeichnungen zeigen dabei in
- Fig. 1: eine Anordnung von Ventil und Ventilverriegelung mit angebautem Anschlussgehäuse und angelegten Auslegern, in
- Fig. 2: in größerem Maßstab die Lagerung des Auslegers im Anschlussgehäuse, in
- Fig. 3: eine abgeänderte Ausführungsform der Sperreinrichtung in Sperrstellung, in
- Fig. 4: eine weitere abgeänderte Ausführungsform der Sperreinrichtung und in
- Fig. 5: einen in der Schnittdarstellung in Fig. 2 entsprechenden Schnitt durch die Anordnung gemäß Fig. 4.

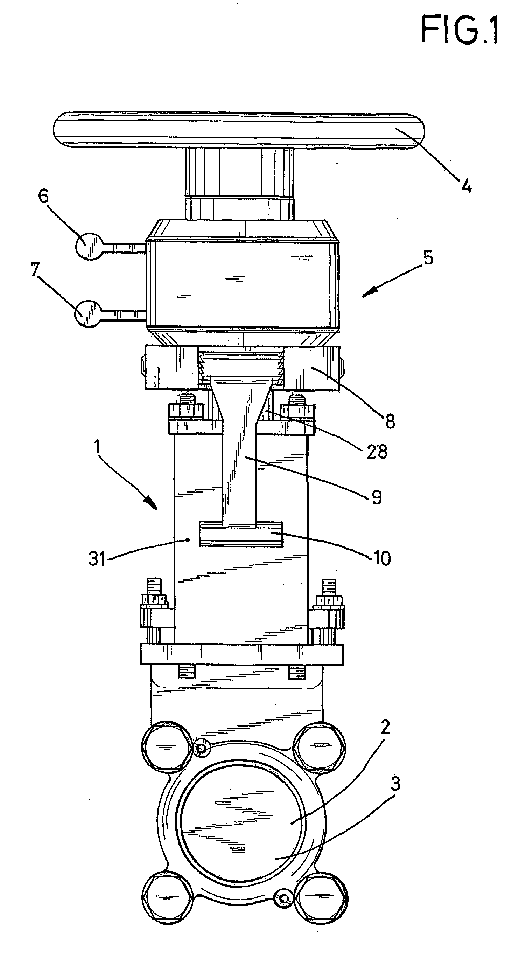

In Fig. 1 ist ein Ventil 1 dargestellt, das in eine Rohrleitung 2 eingeschaltet ist, wobei in der Zeichnung der Ventilschieber 3 erkennbar ist, der die Rohrleitung 2 verschließt. Dieser Schieber 3 wird über eine in der Zeichnung mit 28 bezeichnete Getriebeanordnung mit einem Handrad 4 verbunden, über welches der Ventilschieber 3 betätigt werden kann. Zwischengeschaltet ist eine Ventilverriegelung 5, die in an sich bekannter Weise über die Schlüssel 6 und 7 die Betätigung des eigentlichen Ventils 1 ermöglicht oder verhindert.

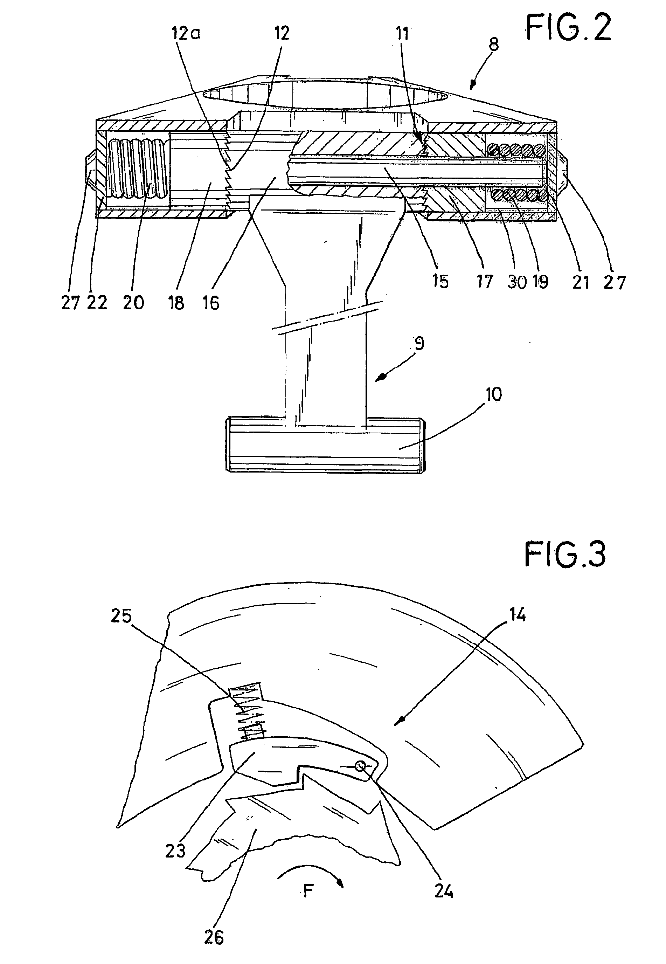

An die Ventilverriegelung 5 schließt drehfest ein Anschlussgehäuse 8 an, das gemäß der Zeichnung in Fig. 1 einen Ausleger 9 trägt, der schwenkbar am Anschlussgehäuse 8 angeordnet ist und sich unter Zwischenschaltung eines Distanzelementes 10 an die polygonale Wandung des Ventilgehäuses 31 anlegen kann. Selbstverständlich kann auf der Rückseite des in Fig. 1 dargestellten eigentlichen Ventils 1 ein gleicher Ausleger 9 vorgesehen sein. Die Lagerung des oder der Ausleger 9 im Anschlussgehäuse 8 geht deutlicher aus Fig. 2 hervor.

In Fig. 2 ist ein Anschlussgehäuseteil 8 dargestellt, das eine Welle 15 aufnimmt, die ein Lagerteil 16 des Auslegers 9 durchquert. Die Stirnbereiche des Lagerteiles 16 des Auslegers 9 sind dabei mit einer Zahnung 12 versehen, die mit der Zahnung 12a von Druckkörpern 17 und 18 zusammen arbeiten, die ebenfalls auf der Welle 15, aber in Axialrichtung der Welle verschieblich angeordnet sind. Die Zahnungen 12, 12a bilden eine Sperreinrichtung 11. Die Druckkörper 17 und 18 sind drehfest in dem Anschlussgehäuse 8 durch die Nut- und Federanordnung 30 gelagert und werden an die Zahnung 12 des Lagerteiles 16 durch Federn 19 und 20 angedrückt, die sich anderenendes an der Innenseite von Verschlusskappen 21 und 22 abstützen, die die im Anschlussgehäuseteil 8 vorgesehene Öffnung verschlieβen. Diese Verschlusskappen 21 und 22 sind manipuliersicher durch Verschlussklappe 27 im Anschlussgehäuseteil 8 festgelegt, so dass ein ungewolltes Beeinflussen der die Schwenkbewegung nur in einer Richtung ermöglichenden Einrichtung von Unbefugten nicht möglich ist.

Durch die vorbeschriebene Einrichtung ist eine Schwenkbewegung der Ausleger oder des Auslegers 9 nur in einer Richtung möglich, die auf das Ventilgehäuse 31 zu gerichtet ist, während eine Schwenkbewegung in entgegengesetzter Richtung durch die Verzahnungen 12 und 12a verhindert wird. Außerdem bewirken die Verzahnungen 12 und 12a, d. h. also diese Zahnscheiben, dass der Ausleger 9 mit einer gewissen Vorspannung an das Ventilgehäuse angelegt wird. Sollten hier gewisse Distanzen entstehen, wird darauf hingewiesen, dass die Distanzelemente 10 dieses ausgleichen können, insbesondere dann, wenn sie exzentrisch gelagert sind.

In Fig. 3 ist eine Sperrklinkenanordnung 14 dargestellt, bei der eine Sperrklinke 23 schwenkbar bei 24 gelagert ist und gegen die Wirkung einer Rückstellfeder 25 abgehoben werden kann. Diese Sperrklinke 23 arbeitet mit einem Zahnrad 26 zusammen, das eine entsprechende Anlagefläche für die Sperrklinke 23 aufweist. Bei Bewegung des Zahnrades 26 in Richtung des Pfeiles F kann der Zahn des Zahnrades 26 an der Schrägfläche der Sperrklinke 23 aufgleiten und die Sperrklinke gegen die Wirkung der Feder 25 abheben, während bei einer Rückwärtsbewegung, d. h. also einer Bewegung entgegen der Pfeilrichtung F, der Zahn des Zahnrades 26 sich an einen entsprechenden Vorsprung der Sperrklinke 23 anlegt und eine Rückbewegung verhindert. Das Zahnrad 26 kann dabei an dem Lagerteil 16 des Auslegers 9 ausgearbeitet sein und das mit der Sperrklinke 23 versehene Bauteil ist mit dem Anschlussgehäuseteil 8 verbunden.

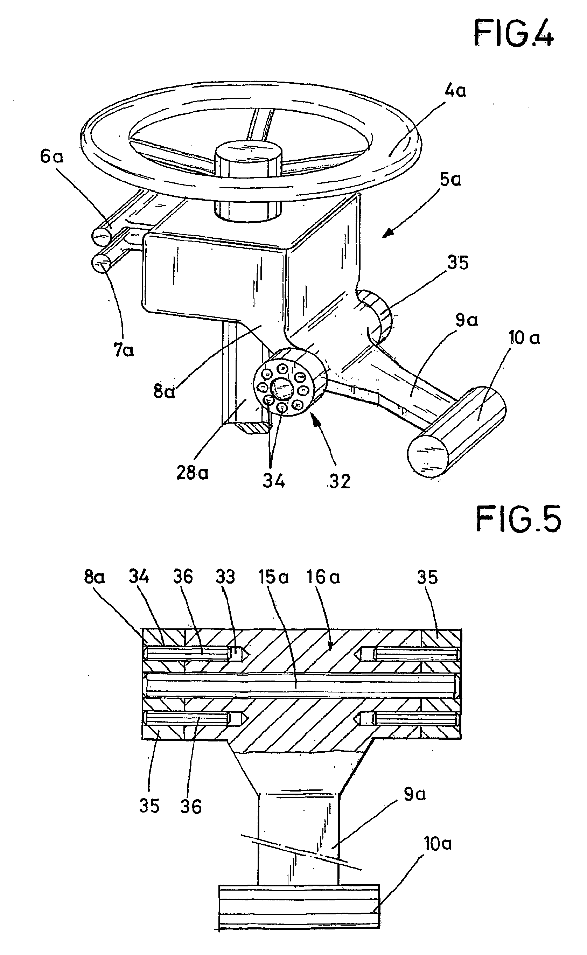

Bei der in den Fig. 4 und 5 dargestellten Ausführungsform sind gleiche Bauteile wie in den voraufgehenden Figuren mit den gleichen Bezugszeichen, aber dem Zusatz a versehen, z. B. die Ventilverriegelung 5a mit den Schlüsseln 6a und 7a.

Die in diesem Ausführungsbeispiel gezeigte Ausführungsform ist in die Ventilverriegelung 5a integriert, die dabei Anschlussscheiben 35 aufweist, die sich an die Stirnseiten des Lagerteiles 16a anlegen. Diese Anschlussscheiben 35 weisen Bohrungen 34 auf und die Stirnseiten des Lagerteiles 16a weisen ebenfalls Bohrungen 33 auf, die miteinander mit den Bohrungen 35 koinzidieren. In diese koinzidierenden Bohrungen 33 und 34 können Sperrstifte 36 oder Schrauben, Nieten od. dgl. eingesetzt werden, wodurch der Ausleger 9a in der Sperrstellung festgelegt werden kann. Hierbei weisen die Anschlussscheiben 35 eine bestimmte Anzahl von Bohrungen auf, wobei diese Bohrungen auch auf unterschiedlichen Teilkreisdurchmessern liegen können.

Durch das unterschiedliche Teilungsmaß für die Bohrungen kann eine Feinjustierung erfolgen. Die anhand von Fig. 2 erläuterte Welle 15, die in dieser Ausführungsform als Welle 15a bezeichnet ist, durchquert dabei das Lagerteil 16a und die Anschlussscheiben 35.

Die Drehmomentstütze gemäß der Erfindung stellt eine kostengünstigere Lösung dar als die individuell angepassten Drehmomentstützen im Stand der Technik. Durch die Ausbildung der erfindungsgemäßen Drehmomentstütze ist diese individuell an die unterschiedlichsten Ventilgrößen und Ventilformen anpassbar.

Die erfindungsgemäße Drehmomentstütze verursacht geringere Montagekosten, eine preiswertere Herstellung und ist je nach Ausführung sehr stabil.

Während in der voraufgehenden Beschreibung ein einteiliger Ausleger erläutert wird, kann dieser selbstverständlich auch mehrteilig ausgebildet sein, um damit auch eine individuelle Anpassung an unterschiedliche Ventilformen zu ermöglichen.

## Patentansprüche

1. Drehmomentstütze für eine zwischen Betätigungseinrichtung (4) und Ventilschieber (3) eingeschaltete über Schlüssel (6, 7) verschließbare Ventilverriegelung (5), um eine Drehung der Ventilverriegelung (5) gegenüber dem Ventilgehäuse (3), zu verhindern, mit wenigstens einem vom Ventil (1) mittelbar oder unmittelbar schwenkbar getragenen Ausleger (9, 9a), der in der ausgeschwenkten Endstellung eine Verdrehung der Ventilverriegelung gegenüber dem Ventil verhindert,
und mit einer die Schwenkbewegung des oder der Ausleger (9, 9a) zurück in die Ausgangslage verhindernden Sperreinrichtung (11, 14, 32),
sowie mit einem die Sperreinrichtung (11, 14, 32) aufnehmenden Anschlussgehäuse (8), das an der Ventilverriegelung (5) oder dem Ventilgehäuse (31) festlegbar ist,
**dadurch gekennzeichnet,**
**dass** die Sperreinrichtung (11) federbeaufschlagte Rasterscheiben mit Zahnungen (12, 12a) aufweist,
derart, dass eine Schwenkbewegung des Auslegers (9, 9a) nur in einer Richtung möglich und in entgegengesetzter Richtung durch die Zahnungen (12, 12a) verhindert ist.

2. Drehmomentstütze nach dem Oberbegriff des Anspruchs 1,
**dadurch gekennzeichnet,**
**dass** die Sperreinrichtung durch eine Sperrklinkenanordnung (14) gebildet ist,
wobei die Sperrklinkenanordnung (14) eine mit einem Zahnrad (26) zusammenarbeitende Sperrklinke (23) aufweist,
derart, dass die Bewegung des Zahnrades (26) in einer Richtung ermöglicht und eine Rückbewegung verhindert ist.

3. Drehmomentstütze nach dem Oberbegriff des Anspruchs 1,
**dadurch gekennzeichnet,**
**dass** die Sperreinrichtung (32) eine oder mehrere Bohrungen (33) im Kopfteil eines Lagerteiles (16a) des Auslegers (9a) aufweist, und eine oder mehrere Bohrungen (34) in einer oder mehreren Anschlussscheiben (35) des Anschlussgehäuses (8a) aufweist, sowie in die Bohrungen (33 und 34) einsetzbare Stifte (36) oder Schrauben oder Nieten oder dergleichen.

4. Drehmomentstütze nach einem der vorhergehenden Ansprüche,
**dadurch gekennzeichnet,**
**dass** das Anschlussgehäuse (8, 8a) und die Sperreinrichtung (11, 14, 32) in die Ventilverriegelung (5, 5a) oder in das Ventilgehäuse (31) integriert ist.

5. Drehmomentstütze nach einem der vorhergehenden Ansprüche,
**dadurch gekennzeichnet,**
**dass** der oder die Ausleger (9) hinsichtlich ihrer Schwenkbewegung unter Vorspannung an das Anschlussgehäuse (8) anschlieβen.

6. Drehmomentstütze nach Anspruch 1 oder 2,
**dadurch gekennzeichnet,**
**dass** die Sperreinrichtung (11, 14) im Anschlussgehäuse (8) angeordnet ist.

7. Drehmomentstütze nach Anspruch 6,
**dadurch gekennzeichnet,**
**dass** die Sperreinrichtung (11) im Anschlussgehäuse (8) oder Ventilgehäuse (31) manipuliersicher mit Verschlussmittel (27) angeordnet ist.

8. Drehmomentstütze nach einem der vorhergehenden Ansprüche,
**dadurch gekennzeichnet,**
**dass** der oder die Ausleger (9) endständig Distanzelemente (10) tragen.

9. Drehmomentstütze nach Anspruch 8,
**dadurch gekennzeichnet,**
**dass** die Distanzelemente (10) aufschiebbar sind.

10. Drehmomentstütze nach Anspruch 9,
**dadurch gekennzeichnet,**
**dass** die Distanzelemente (10) exzentrisch am Ende der Ausleger (9) gelagert sind.

11. Drehmomentstütze nach einem der Ansprüche 1 - 10,
**dadurch gekennzeichnet,**
**dass** der oder die Ausleger (9) einteilig ausgebildet sind.

12. Drehmomentstütze nach einem der Ansprüche 1 - 10,
**dadurch gekennzeichnet,**
**dass** der oder die Ausleger (9) mehrteilig ausgebildet sind.

13. Drehmomentstütze nach einem der vorhergehenden Ansprüche,
**dadurch gekennzeichnet,**
**dass** die Ausleger (9) Spannbänder tragen.

## Claims

1. Torque support for a lockable key (6, 7) -operated valve-interlocking device (5) located between control device (4) and valve slide (3), for preventing the valve-interlocking device (5) from turning in relation to the valve housing (3), with at least one pivotable extension arm (9, 9a) carried directly or indirectly by the valve (1), which extension arm, when in its outermost pivoted position, prevents the valve-interlocking device from turning in relation to the valve, and with a blocking device (11, 14, 32) which prevents the extension arm or arms (9, 9a) from pivoting back into the starting position, and with a connecting housing (8) which holds the blocking device (11, 14, 32), which connecting housing can be fixed to the valve-interlocking device (5) or the valve housing (31), **characterised in that** the blocking device (11) has spring-loaded locking disks with indentations (12, 12a), such that the pivoting movement of the extension arm (9, 9a) is possible in one direction only, and is hindered in the opposite direction by the indentations (12, 12a).

2. Torque support in accordance with the characterising clause of claim 1, **characterised in that** the blocking device is formed by a detent-pawl arrangement (14), where the detent-pawl arrangement (14) has a pawl (23) interacting with a gear wheel (26), in such a way that the movement of the gear wheel (26) is permitted in one direction but prevented in the backward direction.

3. Torque support in accordance with the characterising clause of claim 1, **characterised in that** the blocking device (32) has one or more bores (33) in the head section of a bearing element (16a) of the extension arm (9a), and one or more bores (34) in one or more connecting disks (35) of the connecting housing (8a), and pins (36) or screws or rivets (or similar elements) which can be inserted into the bores (33 and 34).

4. Torque support in accordance with any of the aforementioned claims, **characterised in that** the connecting housing (8, 8a) and the blocking device (11, 14, 32) are integrated in the valve-interlocking device (5, 5a) or in the valve housing (31).

5. Torque support in accordance with any of the aforementioned claims, **characterised in that** the pivoting movement of the extension arm or extension arms (9) causes them to connect with the connecting housing (8) under pressure.

6. Torque support in accordance with claim 1 or claim 2, **characterised in that** the blocking device (11, 14) is arranged in the connecting housing (8).

7. Torque support in accordance with claim 6, **characterised in that** the blocking device (11) is arranged in the connecting housing (8) or valve housing (31) with locking means (27) to prevent interference.

8. Torque support in accordance with any of the aforementioned claims, **characterised in that** the extension arm or extension arms (9) bear spacer elements (10) at their end.

9. Torque support in accordance with claim 8, **characterised in that** the spacer elements (10) can be pushed up.

10. Torque support in accordance with claim 9, **characterised in that** the spacer elements (10) are mounted on bearings eccentrically at the end of the extension arms (9).

11. Torque support in accordance with any of the claims 1-10, **characterised in that** the extension arm or extension arms (9) are formed in one piece.

12. Torque support in accordance with any of the claims 1-10, **characterised in that** the extension arm or extension arms (9) are formed in several pieces.

13. Torque support in accordance with any of the aforementioned claims, **characterised in that** the extension arms (9) carry tightening straps.

## Revendications

1. Bras de réaction pour un verrouillage (5) de vanne intercalé entre un équipement d'actionnement (4) et un tiroir (3) de vanne et obturable à clé (6, 7), pour empêcher une rotation du verrouillage (5) de vanne par rapport au carter (3) de vanne, comprenant au moins un bras (9, 9a) porté de manière indirectement ou directement pivotante par la vanne (1), bras qui lorsque pivoté en position finale empêche le verrouillage de tourner par rapport à la vanne, et avec un dispositif de blocage (11, 14, 32) empêchant le ou les bras (9, 9a) de revenir par un mouvement de pivotement en position de départ, ainsi qu'avec un carter de raccordement (8) recevant le dispositif de blocage (11, 14, 32), carter qu'il est possible d'immobiliser contre le verrouillage (5) de vanne ou le carter (31) de vanne, **caractérisé en ce que** le dispositif de blocage (11) présente des rondelles de crantage sous contrainte ressort équipées de dentures (12, 12a) de sorte qu'un mouvement pivotant du bras (9, 9a) n'est possible que dans un sens et est empêché dans le sens opposé par les dentures (12, 12a).

2. Bras de réaction selon l'énoncé générique de la revendication 1, **caractérisé en ce que** le dispositif de blocage est formé par un ensemble de cliquets de blocage (14), sachant que l'ensemble de cliquets de blocage (14) présente un cliquet de blocage (23) coopérant avec une roue dentée (26) de sorte que le moment de la roue dentée (26) soit possible dans une direction et qu'un mouvement de recul soit empêché.

3. Bras de réaction selon l'énoncé générique de la revendication 1, **caractérisé en ce que** le dispositif de blocage (32) présente un ou plusieurs alésages (33) dans la partie têtière d'une pièce de palier (16a) du bras (9a), et un ou plusieurs alésage (34) dans une ou plusieurs rondelles (35) de raccordement du carter (8a) de rac-cordement, ainsi que des tiges (36) ou vis ou rivets ou similaires remplaçables dans les alésages (33 et 34).

4. Bras de réaction selon l'une des revendications précédentes, **caractérisé en ce que** le carter de raccordement (8, 8a) et le dispositif de blocage (11, 14, 32) sont intégrés dans le verrouillage (5, 5a) de vanne ou dans le carter (31) de vanne.

5. Bras de réaction selon l'une des revendications précédentes, **caractérisé en ce que** le ou les bras (9), relativement à leur mouvement pivotant, se raccordent sous précontrainte au carter de raccordement (8)

6. Bras de réaction selon la revendication 1 ou 2, **caractérisé en ce que** le dispositif de blocage (11, 14) est agencé dans le carter de raccordement (8).

7. Bras de réaction selon la revendication 6, **caractérisé en ce que** le dispositif de blocage (1) est agencé dans le carter de raccordement (8) ou dans le carter (31) de vanne à l'aide de moyens d'obturation (27) pour le mettre à l'abri de manipulations.

8. Bras de réaction selon l'une des revendications précédentes, **caractérisé en ce que** le ou les bras (9) portent en leurs extrémités des éléments écarteurs (10).

9. Bras de réaction selon la revendication 8, **caractérisé en ce que** les éléments écarteurs (10) sont enfilables.

10. Bras de réaction selon la revendication 9, **caractérisé en ce que** les éléments écarteurs (10) sont en appui excentré à l'extrémité des bras (9).

11. Bras de réaction selon l'une des revendications 1 à 10, **caractérisé en ce que** le ou les bras (9) est/sont configuré(s) monobloc.

12. Bras de réaction selon l'une des revendications 1 à 10, **caractérisé en ce que** le ou les bras (9) est/sont configuré(s) en plusieurs parties.

13. Bras de réaction selon l'une des revendications précédentes, **caractérisé en ce que** les bras (9) portent des rubans tendeurs.
